# EUROPEAN PATENT APPLICATION

(11) **EP 1 672 623 A1**
(43) Date of publication of application: **21.06.2006**
(21) Application number: 04788297.2
(22) Date of filing: 29.09.2004
(51) Int. Cl.: G11B 7/007, G11B 7/0045, G11B 7/125, G11B 7/24, G11B 20/12

(54) **INFORMATION RECORDING MEDIUM, INFORMATION RECORDING DEVICE, AND METHOD**

(30) Priority: 30.09.2003 JP 2003340531
(60) Divisional application: 06112831.0
(71) Applicant: Pioneer Corporation, Tokyo 153-8654 (JP)
(72) Inventor: MURAMATSU, Eiji, Pioneer Corporation, Tokorozawa-shi, Saitama 359-8522 (JP); KURODA, Kazuo, Pioneer Corporation, Tokorozawa-shi, Saitama 359-8522 (JP); SUZUKI, Toshio, Pioneer Corporation, Tokorozawa-shi, Saitama 359-8522 (JP); KATO, Masahiro, Pioneer Corporation, Tokorozawa-shi, Saitama 359-8522 (JP); TAKISHITA, Toshihiko, Kofu-shi, Yamanashi 400-0053 (JP); OSHIMA, Seiro, Kofu-shi, Yamanashi 400-0053 (JP); KONDO, Atsushi, Kofu-shi, Yamanashi 400-0053 (JP)
(74) Representative: Haley, Stephen
(86) International application number: PCT/JP2004/014231
(87) International publication number: WO 2005/031720

(57) **Abstract**

An information recording medium comprising a plurality of recording layers to record therein information, wherein at least one of the plurality of recording layers has a management information area to record therein recording speed management information for defining a recordable maximum speed when the information is recorded.

## Description

### Technical Field

The present invention relates to an information recording medium, such as a DVD, and an information recording apparatus, such as a DVD recorder, and an information recording method.

### Background Art

In the information recording medium, such as an optical disc, for example, depending on its type, a maximum speed is defined at which information can be recorded into a recording layer (referred to as a "recordable maximum speed", as occasion demands, in this application). Then, the information recording apparatus is constructed to record the information at a recording speed commensurate with the function of the information recording apparatus in a range of the recordable maximum speed.

Here, as described in a Patent document 1 or the like, there is also developed an information recording medium, such as a multilayer type or dual layer type or multiple layer type optical disc, in which a plurality of recording layers are laminated on the same substrate. The information recording apparatus firstly performs recording with respect to a recording layer located on the top layer thereof, and secondly performs recording with respect to a recording layer located on the second layer thereof, at a recording speed defined for the multilayer type information recording medium.
Patent document 1: Japanese Patent Application Laid Open NO. 2001-23237

### Disclosure of Invention

### Object to be Solved by the Invention

However, in the case of the above-mentioned multilayer type information recording medium, there is a possibility that the recordable maximum speed physically varies in each recoding layer due to designing reasons. Particularly, in a strict sense, the maximum speeds of the recording layers must be different from each other, to a greater or lesser extent, mainly because of the individual sensitivity owned by each recording layer. Moreover, in some conceivable use or specification, it is better to positively make the recordable maximum speed different, in a recording layer on the upper layer side and a recording layer on the lower layer side. In the case where there is a difference in the recordable maximum speed in each recording layer, as described above, if the recordable maximum speed is defined for each information recording medium, as in the above-mentioned Background Art, the recordable maximum speed will be defined for the entire information recording medium, in accordance with a recording layer having the lowest recordable maximum speed. Thus, although recording can be performed at a higher recording speed in another recording layer, lower speed recording is forced in practice. As described above, the recording speed of another recording layer is limited by the recording speed of the recording layer which has the lowest recordable maximum speed, so that as a whole, there arises a technical problem that recording cannot be performed at a recording speed which is to be potentially possible.

In order to solve the above-mentioned conventional problem, it is therefore an object of the present invention to provide a multilayer type information recording medium, an information recording apparatus, and an information recording method, which enable information to be recorded at a proper recording speed in each recording layer, for example.

### Means for Solving the Object

In order to solve the above object, an information recording medium according to claim 1 of the present invention is an information recording medium provided with a plurality of recording layers to record therein information, wherein at least one of the plurality of recording layers has a management information area to record therein recording speed management information for defining a recordable maximum speed when the information is recorded.

In order to solve the above object, an information recording apparatus according to claim 12 of the present invention is an information recording apparatus for recording information onto an information recording medium provided with a plurality of recording layers to record therein the information, wherein at least one of the plurality of recording layers has a management information area to record therein recording speed management information for defining a recordable maximum speed when the information is recorded, the information recording apparatus provided with: a reading device for reading the recording speed management information from the management information area; a recording speed setting device for setting a recording speed corresponding to a recording target layer, in a range of a recordable maximum speed corresponding to the recording target layer in which the information is to be recorded, out of the recordable maximum speed for each of the plurality of recording layers which is defined by the read recording speed management information; and a recording deice for recording the information into the recording target layer at the set recording speed.

In order to solve the above object, an information recording method according to claim 16 of the present invention is an information recording method of recording information onto an information recording medium provided with a plurality of recording layers to record therein the information, wherein at least one of the plurality of recording layers has a management information area to record therein recording speed management information for defining a recordable maximum speed when the information is recorded, the information recording method provided with: a reading process of reading the recording speed management information from the management information area; a recording speed setting process of setting a recording speed corresponding to a recording target layer, in a range of a recordable maximum speed corresponding to the recording target layer in which the information is to be recorded, out of the recordable maximum speed for each of the plurality of recording layers which is defined by the read recording speed management information; and a recording process of recording the information into the recording target layer at the set recording speed.

These effects and other advantages of the present invention become more apparent from the following embodiments and examples.

### Brief Description of Drawings

[FIG. 1] FIG. 1 shows the basic structure of an optical disc according to a first example of the information recording medium of the present invention, wherein the upper part is a substantial plan view showing the optical disc having a plurality of recording areas and the corresponding lower part is a schematic conceptual diagram showing a recording area structure in the radial direction.
[FIG. 2] FIG. 2 is a partially enlarged perspective view showing the recording surface of the optical disc in the first example of the present invention.
[FIG. 3] FIG. 3 is a data structural view conceptually showing an example of the data structure of the optical disc in the case of a parallel method in the first example of the present invention.
[FIG. 4] FIG. 4 is a table showing the classification of data of land pre-pit s which are recorded in a lead-in area in an L1 layer of the optical disc in the first example of the present invention.
[FIG. 5] FIG. 5 is a table showing the arrangement and ECC block address in the lead-in area of the land pre-pits in the L1 layer of the optical disc in the first example of the present invention.
[FIG. 6] FIG. 6 is a table showing the classification of data of land pre-pits which are recorded in a lead-in area in an L0 layer of the optical disc in the first example of the present invention.
[FIG. 7] FIG. 7 is a table showing the arrangement and ECC block address in the lead-in area of the land pre-pits in the L0 layer of the optical disc in the first example of the present invention.
[FIG. 8] FIG. 8 is a table etc. showing the detailed structure of the data of the land pre-pit with a field identification number of ID#1 which is recorded into the lead-in area in the L0 layer and the L1 layer of the optical disc in the first example of the present invention.
[FIG. 9] FIG. 9 is a data structural view conceptually showing an example of the data structure of an optical disc in the case of an opposite method in a second example of the present invention.
[FIG. 10] FIG. 10 is a table showing the classification of data of the land pre-pits which are recorded in the lead-in area in the L0 layer of the optical disc in the second example of the present invention.
[FIG. 11] FIG. 11 is a table showing the arrangement and ECC block address in the lead-in area of the land pre-pits in the L0 layer of the optical disc in the second example of the present invention.
[FIG. 12] FIG. 12 is a block diagram showing an information recording /reproducing apparatus 300 according to an example of the present invention.
[FIG. 13] FIG. 13 is a flowchart showing a recording operation of the optical disc by an information recording apparatus according to the example of the present invention.

### Description of Reference Codes

- 1: Center hole
- 10: Track
- 11: ECC block
- 100: Optical disc
- 101: Lead-in area
- 102: Data zone
- 103: Lead-out area
- 106: Transparent substrate
- 107: First recording layer
- 109: Wobble
- 108: Semitransparent reflective film
- 205: Middle layer
- 207: Second recording layer
- 208: Reflective film
- 300: Information recording / reproducing apparatus
- 306: Data input output control device
- 310: Operation button
- 311: Display panel
- 351: Spindle motor
- 352: Optical pickup
- 353: Signal recording / reproducing device
- 354: Processor (Drive control device)
- 355: Memory
- GT: Groove track
- LT: Land track
- LB: Laser light
- LP: Land pre-pit

### Best Mode for Carrying Out the Invention

### (Embodiment of Information recording medium)

At first, an information recording medium according to an embodiment of the present invention will be discussed.

The embodiment according to the information recording medium of the present invention is an information recording medium provided with a plurality of recording layers to record therein information, wherein at least one of the plurality of recording layers has a management information area to record therein recording speed management information for defining a recordable maximum speed when the information is recorded.

According to the information recording medium of the present invention, out of the plurality of recording layers which are laminated on one-side surface of a substrate, i.e., which constitute the information recording medium of a multilayer type, such as an optical disc of a multilayer type or dual layer type or multiple layer type, at least one of them has the management information area in a lead-in area nearer the inner circumference thereof or in vicinity of it. In the management information area, there is recorded the recording speed management information for defining the recordable maximum speed when the information is recorded onto the information recording medium, for each of the plurality of recording layers. The recording speed management information may be recorded from the beginning of the production of the information recording medium, or maybe recorded upon subsequent pre-formatting or formatting. Moreover, the recording speed management information may be determined, changed, or updated, after the information is actually recorded into a user data area or the like, in accordance with the situation of an error rate or the like at that time. Alternatively, the value of default may be recorded in the management information area before the information is recorded, and after that, it may be updated with a not-default value.

Incidentally, the recording speed management information may be information which directly indicates the recordable maximum speed (e.g. "recording speed information" described later), or may be information which indirectly indicates the recordable maximum speed (e.g. "identification information" described later).

The recording speed management information is recorded in the management information area in such a manner, so that upon the recording thereof performed by an information recording apparatus, such as an optical disc recorder, at first, the recording speed management information is read. Then, on the basis of the recording speed management information, it is possible to obtain the recordable maximum speed, directly (e.g. as the "recording speed information" described later) or indirectly (e.g. as the "identification information" described later), in each of the plurality of recording layers. Moreover, information (i) which can be obtained as information associated with the recording speed management information and (ii) which defines the optimum power of laser for recording and a strategy or the like (e.g. "recording condition information" which indicates an optimum recording condition described later) may be also obtained in each of the plurality of recording layers.

Then, in performing the recording with respect to one of the plurality of recording layers, a recording speed is set in accordance with a recordable maximum speed V1 in the one recording layer, which is obtained on the basis of the recording speed management information, to thereby perform the recording. Moreover, in performing the recording with respect to another one of the plurality of recording layers, a recording speed is set in accordance with a recordable maximum speed V2 (which is generally different from or equal to V1) in the another recording layer, which is obtained on the basis of the recording speed management information, to thereby perform the recording. In any cases, as compared to the case where the recordable maximum speed is defined with respect to each information recording medium as in Background Art, it is possible to perform the recording at the highest recording speed which is potentially possible, in each of the plurality of recording layers, without a limit by the recording speed of another recording layer having a lower recordable maximum speed.

As described above, even if the physically recordable maximum speed varies in the plurality of recording layers, to a greater or lesser, due to designing reasons, or even if the recordable maximum speed in each recording layer is positively designed to be different from the others, it is possible to perform the recording at the highest recording speed which is potentially possible, in each of the plurality of recording layers, without a limit by the recording speed of another recording layer.

In one aspect of the embodiment according to the information recording medium of the present invention, the recording speed management information includes recording speed information which indicates the recordable maximum speed for each of the plurality of recording layers.

According to this aspect, upon the recording, at first, the recording speed information is read which indicates the recordable maximum speed for each of the plurality of recording layers and which is included in the recording speed management information. Then, on the information recording apparatus, it is possible to directly obtain the recordable maximum speed, in each of the plurality of recording layers. Therefore, in accordance with the recordable maximum speed and the function of the information recording apparatus, it is possible to perform the recording at the highest recording speed which is potentially possible, in each of the plurality of recording layer.

In this aspect, the recording speed management information may further include recording condition information which indicates an optimum recording condition for each of the plurality of recording layers, in a form corresponding to the recording speed information.

By such construction, upon the recording, it is also possible to obtain the recording condition information which indicates the optimum recording condition, such as the optimum power of the laser for recording and a strategy, when the recording speed information is read. Thus, on the information recording apparatus, it is possible to perform the recording at the optimum recording condition, in each of the plurality of recording layers.

In this case, moreover, the recording speed management information may have a table on which the recording speed information and the recording condition information are registered for each of the plurality of recording layers, and which has an index.

By such construction, in the management information area, for example, the recording speed information and the recording condition information are registered as for 1X (1time), for 2X (2 times) and so on, on a table with an index P2, and they are registered as for as for 1X (1 time), for 2X (2 times), for 4X (4 times) and so on, on a table with an index P3. Therefore, on the information recording apparatus, it is possible to obtain the recordable maximum speed and the optimum recording condition, such as an optimum laser power and a strategy, certainly and quickly, by referring to the table.

Alternately, in another aspect of the embodiment according to the information recording medium of the present invention, recording is performed on the information recording medium by an information recording apparatus in which recording condition information which indicates an optimum recording condition for each of a plurality of recordable maximum speeds is registered, and the recording speed management information includes recording speed information which indicates the recordable maximum speed for each of the plurality of recording layers.

According to this aspect, upon the recording, at first, the recording speed information which indicates the recordable maximum speed for each of the plurality of recording layers is read. Then, on the information recording apparatus, the recording condition information registered in advance is obtained, as what corresponds to the recording speed information as read above. Therefore, it is possible to record the information, relatively easily, at the optimum recording speed and in the optimum recording condition, in each recording layer, on the basis of (i) the recording speed information obtained from the information recording medium side and (ii) the recording condition information obtained from the information recording apparatus side.

Alternately, in another aspect of the embodiment according to the information recording medium of the present invention, recording is performed on the information recording medium by an information recording apparatus in which (i) recording speed information which indicates the maximum speed and (ii) recording condition information which indicates an optimum recording condition for each of a plurality of recordable maximum speeds are registered, for each identification information for identifying respective one of a plurality of information recording media, and the recording speed management information includes the identification information for identifying the information recording medium.

According to this aspect, upon the recording, at first, the identification information for identifying the information recording medium is read. Then, on the information recording apparatus, the recording speed information and the recording condition information registered in advance are obtained, as what corresponds to the identification information as read above. Therefore, it is possible to record the information, relatively easily, at the optimum recording speed and in the optimum recording condition, in each recording layer, on the basis of (i) the identification information obtained from the information recording medium side and (ii) the recording speed information and the recording condition information obtained from the information recording apparatus side.

In another aspect of the embodiment according to the information recording medium of the present invention, the recording speed management information is at least partially recorded from the beginning of production of the information recording medium, as pre-information of the information recording medium.

According to this aspect, the recordable maximum speed for each of the plurality of recording layers is determined, experimentally and experientially, at the beginning of the production, so that the recording speed management information for defining the recordable maximum speed is recorded in advance, as the pre -information, such as embossed pits and pre-pits, like land pre-pits on an optical disc, for example. Then, upon the recording, at first, by reading the pre-information, it is possible to directly obtain the recordable maximum speed, in each of the plurality of recording layers. As described above, the recording speed management information can be certainly read as the pre-information.

In another aspect of the embodiment according to the information recording medium of the present invention, the recording speed management information is at least partially recorded or updated, as written-once or rewritable information.

According to this aspect, the recordable maximum speed of default, for example, is recorded in advance on the information recording medium or registered in advance in the information recording apparatus. After that, (i) in accordance with the function of the information recording apparatus, such as an optical disc recorder of an individual type, which performs the recording on the information recording medium, or (ii) in accordance with a reproduction situation, such as the extent of an error rate, when test recording or actual recording is performed by the information recording apparatus, a new recordable maximum speed is set. Then, the recording speed management information for defining the new recordable maximum speed is written once or updated into the management information area of the information recording medium. Therefore, it is possible to easily obtain the recordable maximum speed which is suitable for the actual use and environment, after the new recordable maximum speed is written once or updated.

In another aspect of the embodiment according to the information recording medium of the present invention, the management information area is disposed nearer an inner circumference in a top layer out of the plurality of recording layers, and includes a portion in which the recording speed management information with respect to the plurality of recording layers is collectively recorded.

According to this aspect, the management information area is disposed nearer the inner circumference in the top layer, and the recording speed management information with respect to the plurality of recording layers is collectively recorded in this portion. Thus, if this portion is read at first on the information recording apparatus upon the recording, the recording speed management information as for all the recording layers can be collectively obtained. By this, it is possible to directly or indirectly obtain the recordable maximum speed and the optimum recording condition, for all the recording layers. Therefore, even when layer jump is once or repeatedly performed in the continuous recording, it is possible to set the recording speed, in advance or quickly, with respect to a recording layer in which the recording is performed after the layer jump, which is a great advantage.

In another aspect of the embodiment according to the information recording medium of the present invention, the management information area is disposed in each of the plurality of recording layers.

According to this aspect, the management information area is disposed in each of the plurality of recording layers, so that it is possible to collectively obtain the recording speed management information for all the recording layers upon the recording, or it is also possible to separately obtain the recording speed management information for the plurality of recording layers.

In another aspect of the embodiment according to the information recording medium of the present invention, the plurality of recordable maximum speeds are defined to be higher speeds on an upper layer side out of the plurality of recording layers.

According to this aspect, the plurality of recordable maximum speeds are defined to be higher speeds on the upper layer side out of the plurality of recording layers, so that it is advantageous if the sensitivity of a recording layer on the upper layer side is set to be relatively higher than that of a recording layer on the lower layer side. In other words, the recording layer on the upper layer side is hardly or not influenced at all by the presence of the recording layer on the lower layer side, so that it is possible to make the recordable speed higher as it is located on the upper layer side, as described above, by adopting such construction that the sensitivity to the laser for recording on the upper layer side, for example. Moreover, this is extremely useful if the recording layer on the upper layer side is positively used many times upon the recording (e.g. if the recording is started from the upper layer side, and the recording on the lower layer side is started after the upper layer side is already recorded) while increasing the recordable maximum speed in the recording layer on the upper layer side.

### (Embodiment of Information Recording Apparatus)

Next, an information recording apparatus according to an embodiment of the present invention will be discussed.

The information recording apparatus according to the embodiment of the present invention is an information recording apparatus for recording information onto an information recording medium provided with a plurality of recording layers to record therein the information, wherein at least one of the plurality of recording layers has a management information area to record therein recording speed management information for defining a recordable maximum speed when the information is recorded, the information recording apparatus provided with: a reading device for reading the recording speed management information from the management information area; a recording speed setting device for setting a recording speed corresponding to a recording target layer, in a range of a recordable maximum speed corresponding to the recording target layer in which the information is to be recorded, out of the recordable maximum speed for each of the plurality of recording layers which is defined by the read recording speed management information; and a recording deice for recording the information into the recording target layer at the set recording speed.

According to the embodiment of the information recording apparatus in the present invention, upon the operation thereof, at first, the recording speed management information recorded in the management information area of the information recording medium is read by the reading device, with respect to all the plurality of recording layers. Then, on the basis of the recording speed management information, it is possible to obtain the recordable maximum speed, directly (e.g. as the above-mentioned "recording speed information") or indirectly (e.g. via the above-mentioned "identification information"), in each of the plurality of recording layers. Moreover, information which can be obtained as information associated with the recording speed management information and which defines the optimum power of laser for recording and a strategy or the like (e.g. the above-mentioned "recording condition information" which indicates the optimum recording condition) may be also obtained, in each of the plurality of recording layers.

Then, the recording speed corresponding to the recording target layer is set by the recording speed setting device, in a range of the recordable maximum speed obtained for the recording target layer, and the recording is performed by the recording device at the recording speed set in this manner. Moreover, for example, the layer jump is performed under a parallel method or an opposite method, to thereby perform the recording between different recording layers.

As described above, even if the physically recordable maximum speed varies in the plurality of recording layers, to a greater or lesser, due to designing reasons, or even if the recordable maximum speed in each recording layer is positively designed to be different from the others, it is possible to perform the recording at the highest recording speed which is potentially possible, in each of the plurality of recording layers, without a limit by the recording speed of another recording layer.

In one aspect of the embodiment according to the information recording apparatus of the present invention, the recording speed management information includes recording speed information which indicates the recordable maximum speed for each of the plurality of recording layers and further includes recording condition information which indicates an optimum recording condition for each of the plurality of recording layers, in a form corresponding to the recording speed information, and the recording speed setting device sets the recording speed and the recording condition corresponding to the recording target layer, on the basis of the recording speed information and the recording condition information which is read as at least one portion of the recording speed management information.

According to this aspect, the recording speed information and the recording condition information are recorded on the information recording medium side, so that upon the recording, at first, by reading the information, it is possible to easily set the recording speed and the recording condition, on the information recording apparatus side. Moreover, it is possible to save time to record the information in a storing device, such as a memory, in advance, upon the production of the information recording apparatus.

In another aspect of the embodiment according to the information recording apparatus of the present invention, the recording speed management information includes recording speed information which indicates the recordable maximum speed for each of the plurality of recording layers, the information recording apparatus is further provided with a storing device in which recording condition information which indicates an optimum recording condition for each of a plurality of recordable maximum speeds is registered, the reading device reads the recording speed information, as at least one portion of the recording speed management information, and the recording speed setting device sets the recording speed and the recording condition, on the basis of the read recording speed information and a recording condition information which corresponds to the read recording speed information, out of the recording condition information which is registered in the storing device.

According to this aspect, the recording speed information is recorded on the information recording medium side, and the recording condition information is recorded on the information recording apparatus side, so that upon the recording, at first, by reading the recording speed information, the corresponding recording condition information can be taken out. Therefore, it is possible to easily set the recording speed and the recording condition, on the information recording apparatus side.

In another aspect of the embodiment according to the information recording apparatus of the present invention, the recording speed management information includes identification information for identifying the information recording medium, the information recording apparatus is further provided with a storing device in which (i) recording speed information which indicates the maximum speed and (ii) recording condition information which indicates an optimum recording condition for each of a plurality of recordable maximum speeds are registered, for each identification information for identifying respective one of a plurality of information recording media, the reading device reads the identification information, as at least one portion of the recording speed management information, and the recording speed setting device sets the recording speed and the recording condition, on the basis of a recording speed and a recording condition which correspond to the read identification information, out of the recording speed information and the recording condition information which are registered in the storing device.

According to this aspect, the recording speed information and the recording condition information are recorded on the information recording apparatus side, so that upon the recording, at first, by reading the identification information, it is possible to easily set the recording speed and the recording condition corresponding to the identification information.

### (Embodiment of Information Recording Method)

Next, an information recording method according to an embodiment of the present invention will be discussed.

The information recording method according to the embodiment of the present invention is an information recording method of recording information onto an information recording medium provided with a plurality of recording layers to record therein the information, wherein at least one of the plurality of recording layers has a management information area to record therein recording speed management information for defining a recordable maximum speed when the information is recorded, the information recording method provided with: a reading process of reading the recording speed management information from the management information area; a recording speed setting process of setting a recording speed corresponding to a recording target layer, in a range of a recordable maximum speed corresponding to the recording target layer in which the information is to be recorded, out of the recordable maximum speed for each of the plurality of recording layers which is defined by the read recording speed management information; and a recording process of recording the information into the recording target layer at the set recording speed.

According to embodiment of the information recording method in the present invention, as in the case of the above-mentioned information recording apparatus of the present invention, it is possible to perform the recording at the highest recording speed which is potentially possible, in each of the plurality of recording layers.

These effects and other advantages of the present invention become more apparent from the following embodiments.

As explained above, according to the embodiment of the information recording medium in the present invention, it is provided with: the substrate; and the plurality of recording layers having the management information area to record therein the recording speed management information. Therefore, it is possible to perform the recording at the highest recording speed which is potentially possible, in each of the plurality of recording layers. According to the information recording apparatus and method of the present invention, they are provided with: the reading device and process; the recording speed setting device and process; and the recording device and process, respectively. Therefore, it is possible to perform the recording at the highest recording speed which is potentially possible, in each of the plurality of recording layers.

### Example

### (Information Recording Medium)

### (First Example)

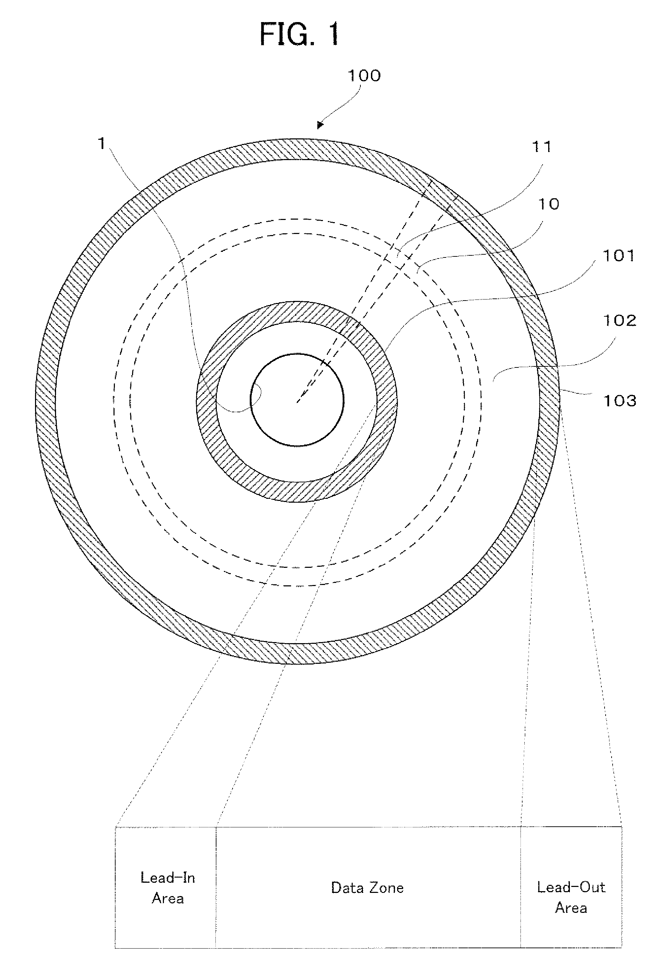

Next, with reference to FIG. 1 to FIG. 8, an optical disc according to the first example of the information recording medium of the present invention will be discussed in detail.

At first, with reference to FIG. 1, the basic structure of the optical disc in the first example will be discussed. FIG. 1 shows the basic structure of the optical disc according to the first example of the information recording medium of the present invention, wherein the upper part is a substantial plan view showing the optical disc having a plurality of recording areas and the corresponding lower part is a schematic conceptual diagram showing a recording area structure in the radial direction.

As shown in FIG. 1, an optical disc 100 has a recording surface on a disc main body with a diameter of about 12 cm, as is a DVD. On the recording surface, the optical disc 100 is provided with: a lead-in area 101; a data zone 102; and a lead-out area 103, from the inner circumferential side to the outer circumferential side, with a center hole 1 as the center. Then, in each recording area, tracks 10, such as groove tracks and land tracks, are alternately provided, spirally or concentrically, with the center hole 1 as the center. On the track 10, data is divided and recorded by a unit of ECC block 11. The ECC block 11 is a data management unit by a pre-format address in which record information is error-correctable.

Incidentally, the present invention is not particularly limited to the optical disc having these three areas. For example, even if the lead-in area 101 or the lead-out area 103 does not exist, a data structure explained below can be constructed. Moreover, as described later, the lead-in area 101 and the lead-out area 103 may be further segmentized.

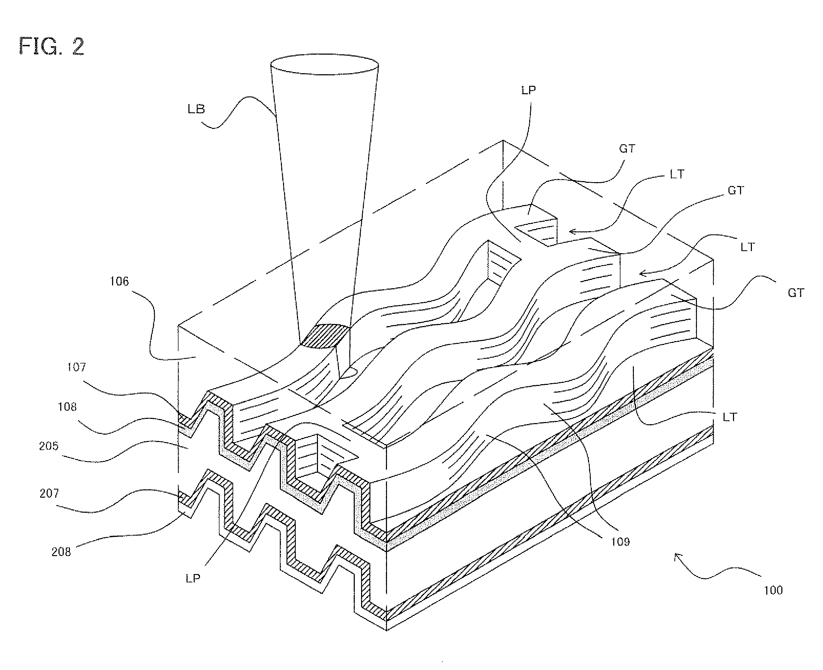

As shown in FIG. 2, the optical disc 100 in the first example is constructed as a two-layer type optical disc in which a plurality of data zones 102 etc. are formed in a laminated structure, for example. FIG. 2 is a partially enlarged perspective view showing the recording surface of the optical disc in the first example of the present invention.

In FIG. 2, in the optical disc 100 in the first example, a first recording layer 107 of a phase change type or of an irreversible change recording type by hear or the like, which constitutes an information recording surface, is laminated on (on the lower side in FIG. 2 of) a disc-shaped transparent substrate 106, and moreover, a semitransparent reflective film 108 is laminated on (on the lower side in FIG. 2 of) the first recording layer 107. On the information recording surface constructed from the surface of the first recording layer 107, there are alternately formed groove tracks GT and land tracks LT. Incidentally, upon the recording and reproduction of the optical disc 100, as shown in FIG. 2, for example, laser light LB is irradiated on the groove track GT through the transparent substrate 106. For example, upon the recording, by irradiating the laser light LB with a recording laser power, writing by a phase change or irreversible change recording by heat or the like is performed to the first recording layer 107 in accordance with the record data. On the other hand, upon the reproduction, by that the laser light LB is irradiated with a reproduction laser power which is weaker than the recording laser power, reading of the record data written in the first recording layer 107 is performed.

In the example, the groove track GT is oscillated with a constant amplitude and at a constant spatial frequency. In other words, the groove track GT is wobbled, and the period or cycle of the wobble 109 is set to a predetermined value. On the land track LT, an address pit referred to as a land pre-pit LP which indicates pre-format address information is formed. By the two addressing (i.e. the wobble 109 and the land pre-pit LP), it is possible to obtain information which is necessary for the control of disc rotation during the recording, the generation of a recording clock, and the recording of data, such as a recording address. Incidentally, the wobble 109 of the groove track GT may be modulated in a predetermined modulation method, such as frequency modulation and phase modulation, to thereby record the pre-format address information in advance.

Particularly in the example, a second recording layer 207 is formed on (on the lower side in FIG. 2 of) the semitransparent reflective film 108, and moreover, a reflective film 208 is laminated on (on the lower side in FIG. 2 of) the second recording layer 207. The second recording layer 207 is constructed such that the recording and reproduction of a phase change type or an irreversible change recording type by heat or the like can be performed, in substantially the same manner of the first recording layer 107, by irradiating the laser light LB through the transparent substrate 106, the first recording layer 107, and the semitransparent reflective film 108. The second recording layer 207 and the reflective film 208 may be formed on the transparent substrate 106 on which the first recording layer 107 and the semitransparent reflective film 108 or the like are formed. Alternatively, after formed on different substrates, second recording layer 207 and the reflective film 208 may be pasted onto the transparent substrate 106. Incidentally, there is provided a transparent middle layer 205 made of a transparent adhesive or the like, between the semitransparent reflective film 108 and the second recording layer 207, as occasion demands, in accordance with the production method.

Upon the recording / reproduction of such a two-layer type optical disc 100, the recording / reproduction in the first recording layer 107 or the second recording layer 207 is performed, depending on which recording layer has the focus position of laser light LB.

Moreover, the optical disc 100 in the first example is not limited to a two-layer single sided type, i.e., a dual layer type, but may be a two-layer double sided type, i.e., a dual layer double sided type. Furthermore, the optical disc 100 in the first example is not limited to the optical disc having the two recording layers, as described above, but may be an optical disc of a multilayer type which has three or more layers.

### (Parallel Method)

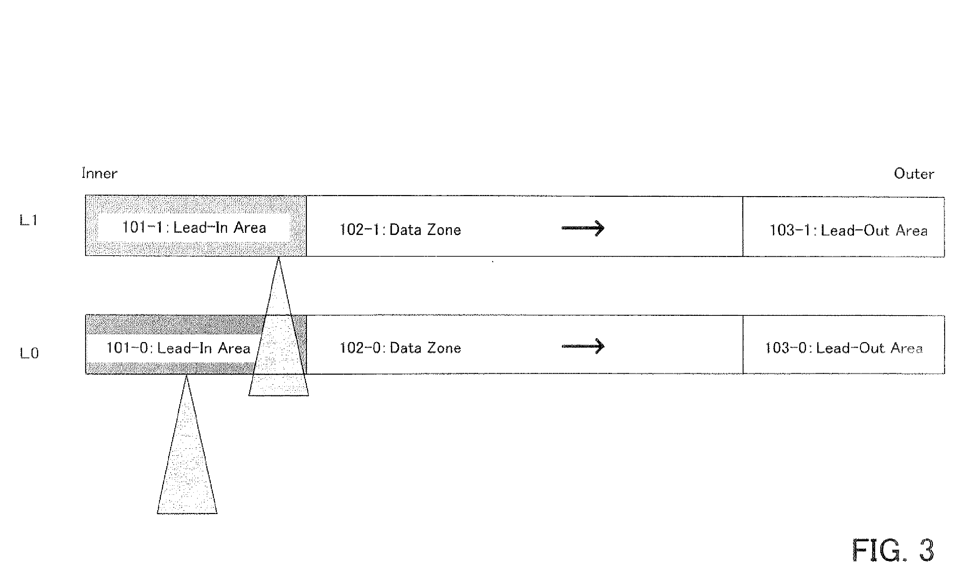

Next, with reference to FIG. 3, the data structure of the optical disc in the case of a parallel method in the first example will be discussed. FIG. 3 is a data structural view conceptually showing an example of the data structure of the optical disc in the case of the parallel method in the first example.

As shown in FIG. 3, the optical disc 100 in the first example includes an L0 layer and an L1 layer, as the first and second recording layers shown in FIG. 2, respectively.

The L0 layer is provided with: a lead-in area 101-0; a data zone 102-0; and a lead-out area 103-0, from the inner circumferential side to the outer circumferential side. The lead-in area 101-0 is provided with a not-illustrated OPC (Optimum Power Calibration) area or the like.

Moreover, the L1 layer is provided with: a lead-in area 101-1; a data zone 102-1; and a lead-out area 103-1, from the inner circumferential side to the outer circumferential side. The lead-in area 101-1 is also provided with a not-illustrated OPC area or the like.

Then, the laser light is irradiated from the side of a not-illustrated substrate, i.e., from the lower to the upper side in FIG. 3, by an optical pickup of an information recording / reproducing apparatus described later, and the focal distance thereof or the like is controlled. At the same time, the travel distance and direction in the radial direction of the optical disc are controlled. By this, the data is recorded into each recording layer. Moreover, if the information recording / reproducing apparatus functions as an information reproducing apparatus, the recorded data is reproduced.

From the viewpoint of the travel direction in the radial direction of the optical disc displaced by the optical pickup, there are two types of the recording or reproducing methods, which are the parallel method and an opposite method. The parallel method is adopted in the first example.

Here, the parallel method is a method in which the optical pickup of the information recording / reproducing apparatus is displaced from the inner to the outer circumferential side, i.e. in the right direction of an arrow in FIG. 3, in the L0 layer, and in the same manner as this, the optical pickup is displaced from the inner to the outer circumferential side, i.e. in the right direction of an arrow in FIG. 3, even in the L1 layer.

In the parallel method, if the recording or reproduction is ended in the L0 layer, the optical pickup, located on the most outer circumference of the optical disc, needs to be displaced again to the most inner circumference, when the recording or reproduction is started in the L1 layer. Thus, it takes more time, by that much, to change from the L0 layer to the L1 layer.

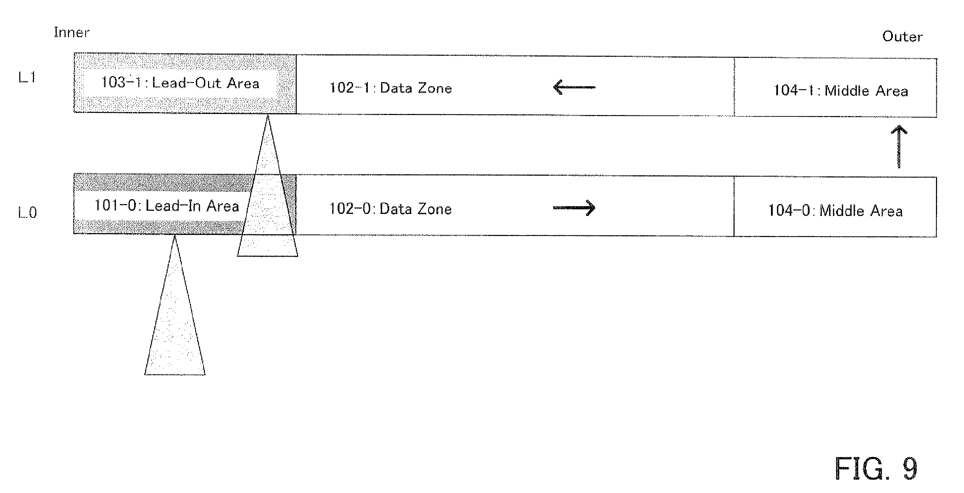

The other method, which is the opposite method, will be discussed in a second example, with reference to FIG. 9, described later.

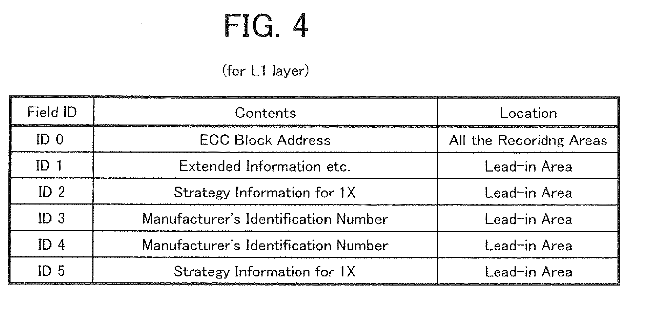

Next, with reference to FIG. 4 to FIG. 8, an explanation will be given to the type of data of land pre-pits which are recorded in the lead-in area in the L0 layer and the L1 layer of the optical disc in the first example which adopts the parallel method, the arrangement in the lead-in area of the land pre-pits, and a principle in which a recordable maximum speed and an optimum recording condition are identified or distinguished by the land pre-pits. Incidentally, for convenience of explanation, firstly, the L1 layer in which the recordable maximum speed is a low speed of 1X will be discussed, and secondly, the L0 layer in which the recordable maximum speed is a high speed of 4X will be discussed.

At first, with reference to FIG. 4, the type of the data of the land pre-pits which are recorded in the lead-in area in the L1 layer of the optical disc in the first example will be discussed. FIG. 4 is a table showing the classification of the data of the land pre-pits which are recorded in the lead-in area in the L1 layer of the optical disc in the first example. Incidentally, the table shows a field identification number (Field ID), information to be recorded (Content), and a recording location (Location), from the left column.

As shown in FIG. 4, the data of the land pre-pits which are recorded in the lead-in area in the L1 layer is classified into ID#0 to ID#5 by the Field ID.

In the land pre-pit identified by ID#0, information of an ECC (Error Correcting Code) block address is recorded. This land pre-pit is located in all the recording areas of the optical disc. Here, the ECC block address is an error-correetable recording unit, i.e., position information based on the ECC block.

In the land pre-pit identified by ID#1, information, such as extended information, which constitutes one example of the index of the present invention described later, is recorded. The land pre-pit is located in the lead-in area of the optical disc.

In the land pre-pits identified by ID#2 and ID#5, strategy information for 1X, which constitutes one example of the recording speed information and the recording condition information of the present invention, is recorded. The land pre-pits are located in the lead-in area of the optical disc.

In the land pre-pits identified by ID#3 and ID#4, information of a manufacturer's identification number, which constitutes one example of the identification information of the present invention, is recorded. The land pre-pits are located in the lead-in area of the optical disc.

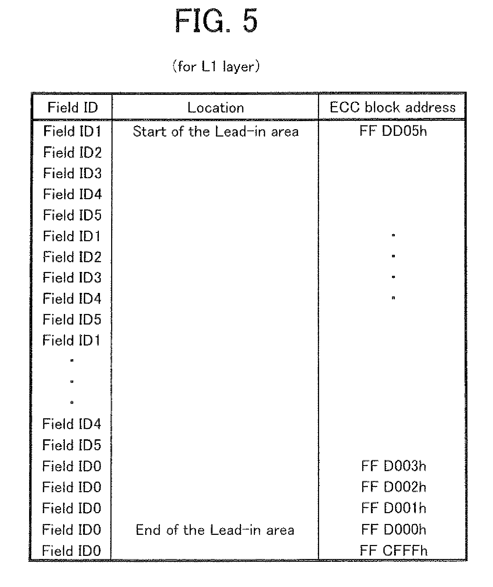

Next, with reference to FIG. 5, the arrangement in the lead-in area of the land pre-pits in the L1 layer of the optical disc in the first example which adopts the parallel method will be discussed. FIG. 5 is a table showing the arrangement and ECC block address in the lead-in area of the land pre-pits in the L1 layer of the optical disc in the first example which adopts the parallel method. Incidentally, this table shows the field identification number, the recording location, and the ECC block address, from the left column.

As shown in FIG. 5, the land pre-pits identified by the field identification numbers of ID#1 to ID #5 or ID#0 are periodically recorded in the lead-in area in the L1 layer. These land pre-pits are located at ECC block addresses of "FFDD05" to "FFCFFF", for example.

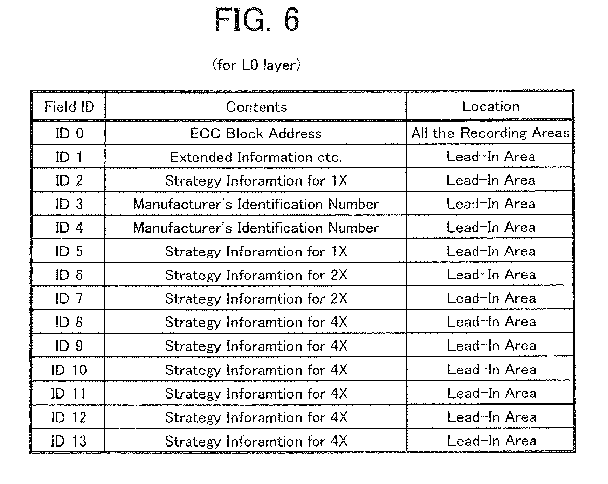

Next, with reference to FIG. 6, the type of the data of the land pre-pits which are recorded in the lead-in area in the L0 layer of the optical disc in the first example will be discussed. FIG. 6 is a table showing the classification of the data of the land pre-pits which are recorded in the lead-in area in the L0 layer of the optical disc in the first example. Incidentally, the structure of the table is the same as that in the above-mentioned FIG. 4.

As shown in FIG. 6, the data of the land pre-pits which are recorded in the lead-in area in the L0 layer is classified into ID#0 to ID#13 by the Field ID.

In the land pre-pits identified by ID#0 to ID#5, the same data as in the land pre-pit recorded in the lead-in area of the L1 layer explained in the above-mentioned FIG. 4 is recorded.

In the land pre-pits identified by ID#6 and ID#7, strategy information for 2X, which constitutes one example of the recording speed information and the recording condition information of the present invention, is recorded. The land pre-pits are located in the lead-in area of the optical disc.

In the land pre-pits identified by ID#8 to ID#13, strategy information for 4X, which constitutes one example of the recording speed information and the recording condition information of the present invention, is recorded. The land pre-pits are located in the lead-in area of the optical disc.

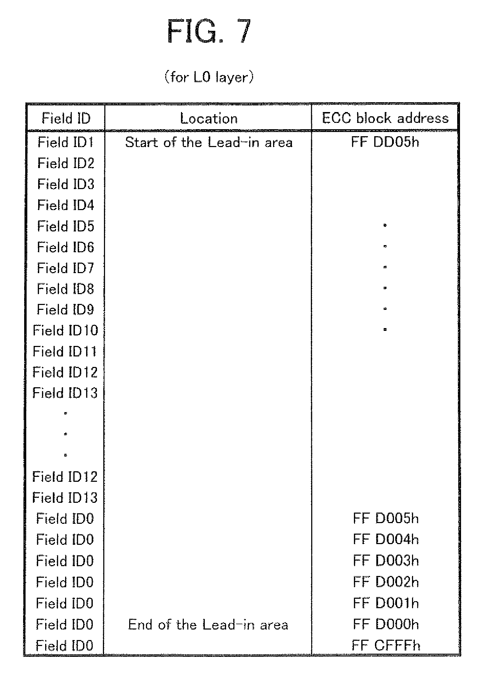

Next, with reference to FIG. 7, the arrangement in the lead-in area of the land pre-pits in the L0 layer of the optical disc in the first example which adopts the parallel method will be discussed. FIG. 7 is a table showing the arrangement and ECC block address in the lead-in area of the land pre-pits in the L0 layer of the optical disc in the first example which adopts the parallel method. Incidentally, the structure of the table is the same as that in the above-mentioned FIG. 5.

As shown in FIG. 7, the land pre-pits identified by the field identification numbers of ID#1 to ID#13 or ID#0 are periodically recorded in the lead-in area in the L0 layer. The land pre-pits are located at ECC block addresses of "FFDD05" to "FFCFFF", for example.

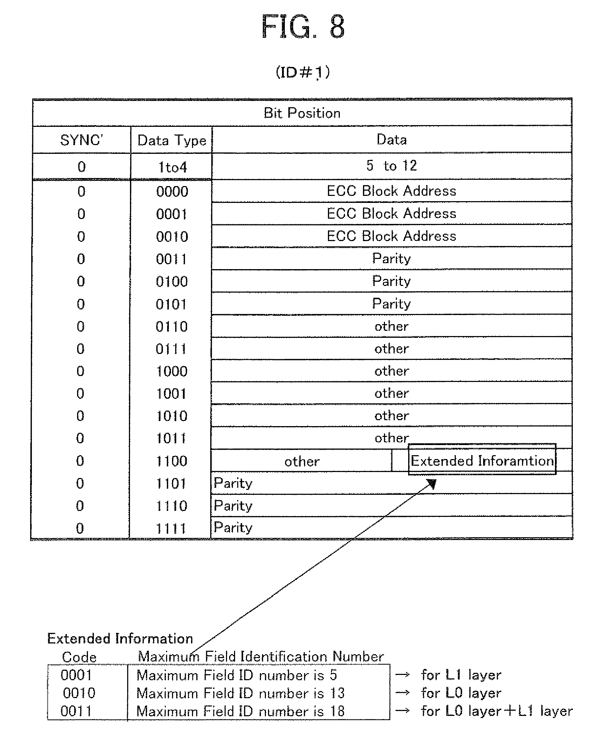

Next, with reference to FIG. 8, an explanation will be given to the principle in which a recordable maximum speed and an optimum recording condition are identified or distinguished by the land pre-pits which are recorded into the lead-in area in the L0 layer and the L1 layer of the optical disc in the first example which adopts the parallel method.

FIG. 8 is a table etc. showing the detailed structure of the data of the land pre-pit with the field identification number of ID#1 which is recorded into the lead-in area in the L0 layer and the L1 layer of the optical disc in the first example.

As shown in FIG. 8, the data expressed by a binary bit string in a matrix of 16 rows X 13 columns is recorded in ID#1. The bit in the first column is a SYNC bit, i.e., a bit for synchronization. The bits in the second to the fifth columns are a bit string with the data type recorded. In the bits in the sixth to the thirteenth columns, the actual data is recorded.

Specifically, the data with the data type of "0000" to "0010" manes a relative block address, and the data with the data type of "0011" to "0101" means parity. The latter half of the data with the data type of "1100", i.e. the data in the tenth to thirteenth columns, means extended information which constitutes one example of the index of the present invention.

The extended information recorded in the land pre-pit with the field identification number of ID#1 is read by the information recording /reproducing apparatus described later. By this, the recordable maximum speed and the optimum recording condition in the L0 layer and the L1 layer can be selected.

Specifically, the extended information shown in the lower part of FIG. 8 is constructed from a code and a maximum field identification number. More specifically, if the code of the extended information is "0001", the maximum field identification number is "ID#5". If the code of the extended information is "0010", the maximum field identification number is "ID#13". If the code of the extended information is "0011", the maximum field identification number is "ID#18".

Here, if the extended information recorded in the land pre-pit with the field identification number of ID#1 in the L1 layer is set to "0001", the maximum field identification number becomes "ID#5" by that the extended information is read by the information recording / reproducing apparatus. Then, as explained in FIG. 4 and FIG. 5 described above, it is possible to select the strategy information for 1X.

On the other hand, if the extended information recorded in the land pre-pit with the field identification number of ID#1 is set to "0010", the maximum field identification number becomes "ID#13" by that the extended information is read by the information recording / reproducing apparatus. Then, as explained in FIG. 6 and FIG. 7 described above, it is possible to select the strategy information for 1X, 2X, or 4X.

### (Second Example - Opposite Method·)

Next, with reference to the above-mentioned FIG. 8, as occasion demands, in addition to FIG. 9 to FIG. 11, an explanation will be given to the data structure of an optical disc according to a second example which adopts an opposite method, the type of data of land pre-pits which are recorded in a lead-in area in an L0 layer, the arrangement in the lead-in area of the land pre-pits, and a principle in which the recordable maximum speed and the optimum recording condition are identified or distinguished by the land pre-pits.

At first, with reference to FIG. 9, the data structure of the optical disc in the second example will be discussed in detail. FIG. 9 is a data structural view conceptually showing an example of the data structure of the optical disc in the second example.

The basic physical characteristics and structure of the optical disc in the second example are the same as those of the optical disc in the first example.

As shown in FIG. 9, an optical disc 100 in the second example includes a not-illustrated substrate and two recording layers laminated on the substrate, i.e. an L0 layer and an L1 layer.

The L0 layer is provided with: a lead-in area 101-0; a data zone 102-0; and a middle area 104-0, from the inner circumferential side to the outer circumferential side.

Moreover, the L1 layer is provided with: a lead-out area 103-1; a data zone 102-1; and a middle area 104-1, from the inner circumferential side to the outer circumferential side.

In particular, in the optical disc in the second example, the opposite method is adopted in the recording or reproducing method of the data. Here, the opposite method is a method in which an optical pickup is displaced by the information recording / reproducing apparatus from the inner to the outer circumferential side, i.e. in the right direction of an arrow in FIG. 9, in the L0 layer, and as opposed to this, the optical pickup is displaced from the outer to the inner circumferential side, i.e. in the left direction of an arrow in FIG. 9, in the L1 layer.

In the opposite method, if the recording or reproduction is ended in the L0 layer, the optical pickup, located on the most outer circumference of the optical disc, does not have to be displaced again to the most inner circumference, when the recording or reproduction is started in the L1 layer, and it is only necessary to change the focal distance from the L0 layer to the L1 layer. Thus, it takes less time to change from the L0 layer to the L1 layer.

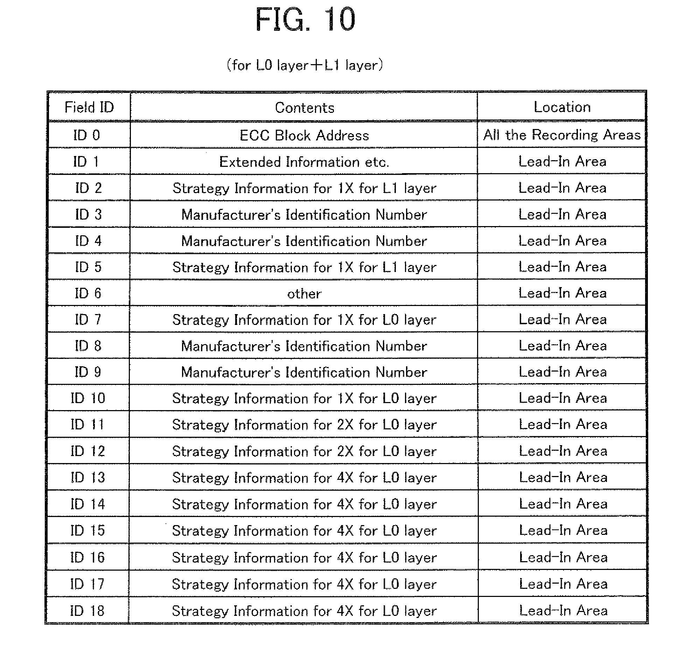

Next, with reference to FIG. 10, the type of the data of the land pre-pits which are recorded in the lead-in area in the L0 layer of the optical disc in the second example will be discussed. FIG. 10 is a table showing the classification of data of the land pre-pits which are recorded in the lead-in area in the L0 layer of the optical disc in the second example. Incidentally, the structure of the table is the same as that in the above-mentioned FIG. 4.

As shown in FIG. 10, the data of the land pre-pits which are recorded in the lead-in area in the L0 layer is classified into ID#0 to ID#18 by the field identification number (Field ID).

In the land pre-pits identified by ID#0 to ID#5, there is recorded the same data as the data of the land pre-pits which are recorded in the lead-in area in the L1 layer, explained with reference to FIG. 5, in the above-mentioned first example.

In the land pre-pit identified by ID#6, other information is recorded in the lead-in area in the L0 layer of the optical disc 100.

In the land pre-pits identified by ID#7 and ID#10, strategy information for 1X with respect to the L0 layer, which constitutes one example of the recording speed information and the recording condition information of the present invention, is recorded in the lead-in area in the L0 layer of the optical disc 100.

In the land pre-pits identified by ID#8 and ID#9, information of a manufacturer's identification number, which constitutes one example of the identification information of the present invention, is recorded in the lead-in area in the L0 layer of the optical disc 100.

In the land pre-pits identified by ID#11 and ID#12, strategy information for 2X with respect to the L0 layer, which constitutes one example of the recording speed information and the recording condition information of the present invention, is recorded in the lead-in area in the L0 layer of the optical disc 100.

In the land pre-pits identified by ID#13 to ID#18, strategy information for 4X with respect to the L0 layer, which constitutes one example of the recording speed information and the recording condition information of the present invention, is recorded in the lead-in area in the L0 layer of the optical disc 100.

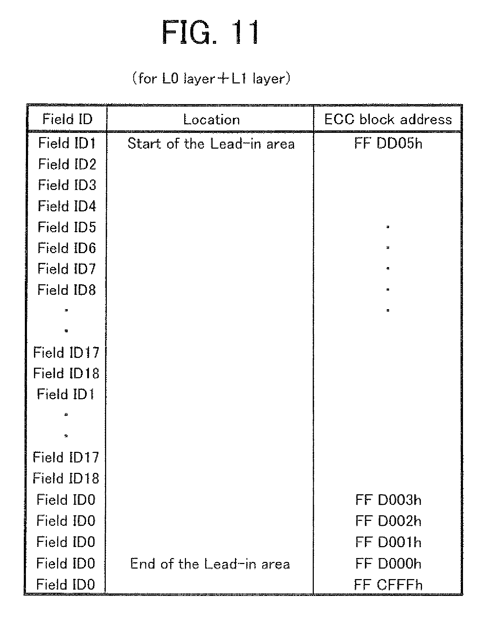

Next, with reference to FIG. 11, the arrangement in the lead-in area of the land pre-pits in the L0 layer of the optical disc in the second example which adopts the parallel method will be discussed. FIG. 11 is a table showing the arrangement and ECC block address in the lead-in area of the land pre-pits in the L0 layer of the optical disc in the second example. Incidentally, the structure of this table is the same as in FIG. 5 in the above-mentioned first example.

As shown in FIG. 11, the land pre-pits identified by the field identification numbers of ID#1 to ID#18 or ID#0 are periodically recorded in the lead-in area in the L0 layer. The land pre-pits are located at ECC block addresses of "FFDD05" to "FFCFFF", for example.

Next, with reference to the above-mentioned FIG. 8, an explanation will be given to the principle in which the recordable maximum speed and the optimum recording condition are identified or distinguished by the land pre-pits which are recorded into the lead-in area in the L0 layer of the optical disc in the second example which adopts the opposite method.

The extended information recorded in the land pre-pit with the field identification number of ID#1 shown in FIG. 8 is read by the information recording / reproducing apparatus described later. By this, the recordable maximum speed and the optimum recording condition in the L0 layer and the L1 layer can be selected.

Specifically, as shown in the lower part of the above-mentioned FIG. 8, if the extended information with the field identification number of ID#1 in the L0 layer is set to "0011", the maximum field identification number becomes "ID#18" by that the extended information is read by the information recording / reproducing apparatus. Then, as explained in FIG. 10 and FIG. 11 described above, the strategy information for 1X can be selected with respect to the L1 layer. At the same time, the strategy information for 1X, 2X, or 4X can be selected with respect to the L0 layer.

### (Information Recording / Reproducing Apparatus)

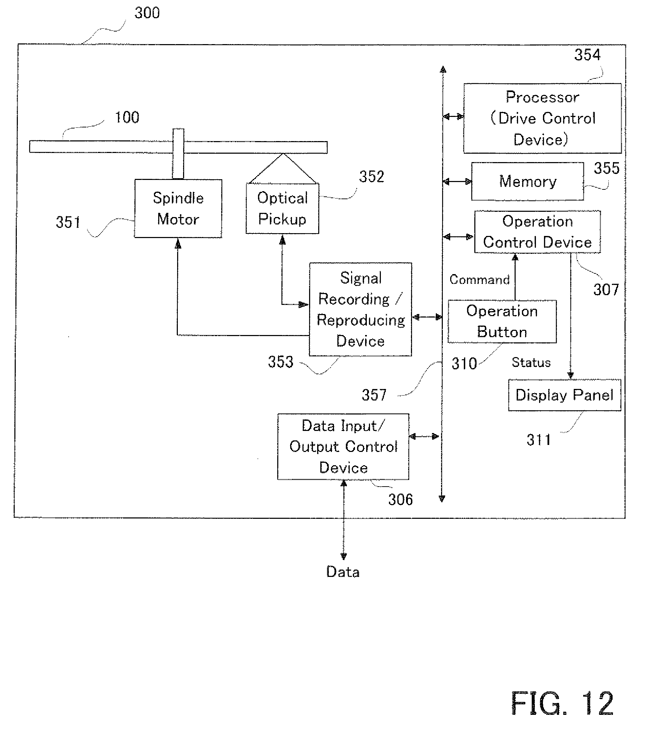

Next, with reference to FIG. 12, the structure and the operation of an information recording apparatus in the present invention will be discussed. Particularly, in the example, the information recording apparatus of the present invention is applied to the information recording / reproducing apparatus for the optical disc described above.

At first, with reference to FIG 12, the structure of an information recording / reproducing apparatus 300 will be discussed. FIG. 12 is a block diagram showing an information recording / reproducing apparatus 300 according to an example of the present invention. Incidentally, the information recording / reproducing apparatus 300 has a function of recording the record data onto the optical disc 100 and a function of reproducing the record data recorded on the optical disc 100.

With reference to FIG. 12, the inner structure of the information recording / reproducing apparatus 300 will be discussed. The information recording / reproducing apparatus 300 is an apparatus for recording the information onto the optical disc 100 and reading the information recorded on the optical disc 100, under the control of a processor 354.

The information recording / reproducing apparatus 300 is provided with the optical disc 100; a spindle motor 351; an optical pickup 352; a signal recording / reproducing device 353; the processor (drive control device) 354; a memory 355; a data input / output control device 306; an operation button 310; a display panel 311; and a bus 357.

The spindle motor 351 is intended to rotate and stop the optical disc 100, and operates upon accessing the optical disc. More specifically, the spindle motor 351 is constructed to rotate and stop the optical disc 100 at a predetermined speed, under spindle servo from a not-illustrated servo unit or the like.

The optical pickup 352 is intended to perform the recording /reproduction with respect to the optical disc 100, and is provided with a laser device, a lens, and the like. More specifically, the optical pickup 352 irradiates the optical disc 100 with a light beam, such as a laser beam, as reading light with a first power upon reproduction, and as writing light with a second power upon recording, with it modulated.

The signal recording / reproducing device 353 controls the spindle motor 351 and the optical pickup 352, to thereby perform the recording /reproduction with respect to the optical disc 100.

The memory 355 is used in the whole data processing and the OPC process or the like on the disc drive 300, including a buffer area for the record / reproduction data, an area used as an intermediate buffer when data is converted into the data that can be used on the signal recording / reproducing device 353, and the like. Moreover, the memory 355 is provided with: a ROM area into which a program for performing an operation as recording equipment is stored; a buffer for compression / decompression of video data; a RAM area into which a parameter required for a program operation is stored; and the like.

Particularly in the example, the memory 355 constitutes one example of the "storing device" of the present invention. In the memory 355, the recordable maximum speed and the optimum recording condition, such as an optimum laser power and a strategy, in the L1 layer in addition to or in place of the L0 layer are obtained.

The processor (drive control device) 354 is connected to the signal recording / reproducing device 353 and the memory 355 through the bus 357, and controls the entire information recording / reproducing apparatus 300 by giving an instruction to various controlling devices. Normally, software for operating the processor 354 is stored in the memory 355.

The data input / output control device 306 controls the input / output of the data from the exterior with respect to the information recording /reproducing apparatus 300, to thereby perform storage to and export from the data buffer on the memory 355. If the input / output of the data is a video signal, the data input / output control device 306 compresses (encodes) the data received from the exterior into a MPEG format upon the data input, and outputs it to the memory 355. Moreover, the data input / output control device 306 decompresses (decodes) the data in the MPEG format received from the memory 355, and outputs it to the exterior.

The operation control device 307 receives an operation instruction and performs display with respect to the information recording / reproducing apparatus 300, and transmits an instruction by the operation button 310, such as an instruction to record or reproduce, to the processor 354. Moreover, the operation control device 307 outputs the operational state of the information recording / reproducing apparatus 300, such as during recording and during reproduction, to the display panel 310, such as a fluorescent tube.

One example of the disc drive 300, as explained above, is recorder equipment for recording and reproducing video images in household equipment. The recorder equipment records a video signal from a broadcast reception tuner and an external connection terminal, onto a disc, and outputs the video signal reproduced from the disc to external display equipment, such as a television. The operation as the recorder equipment is performed by executing a program stored in the memory 355, on the processor 354.

### (Flow of Recording Operation performed by Information Recording Apparatus)

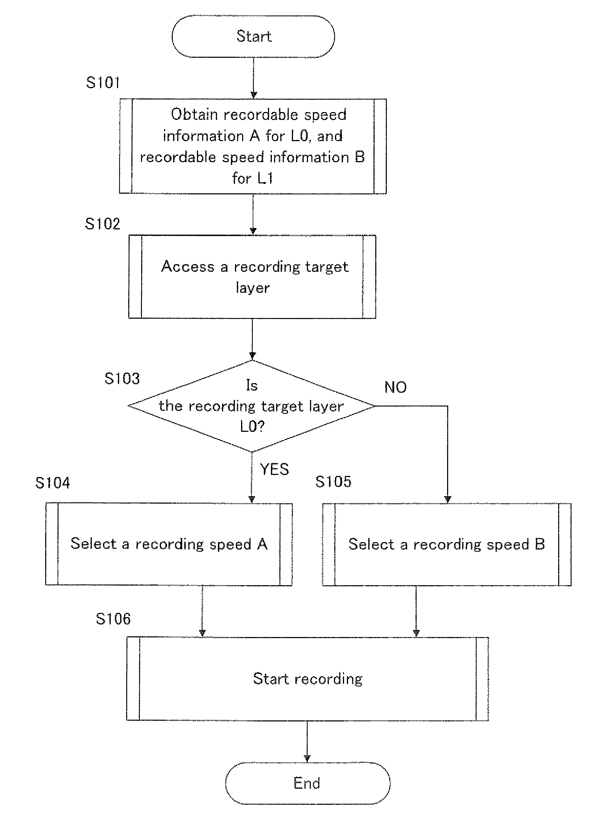

Next, with reference to FIG. 13, a flow of the recording operation of the information recording apparatus for the optical disc in the example of the present invention will be discussed. FIG. 13 is a flowchart showing the recording operation of the optical disc by the information recording apparatus according to the example of the present invention.

At first, as shown in FIG. 13, in the case of the parallel method, the extended information, which constitutes one example of the index of the present invention, in the lead-in area in the L0 layer and the L1 layer described above is read and obtained by the optical pickup of the information recording apparatus (step S101). On the other hand, in the case of the opposite method, as described above, the extended information in the lead-in area in the L0 layer is read and obtained, for example.

Therefore, the recordable maximum speed (e.g., recording speed "A" or recording speed "B") and the optimum recording condition, such as an optimum laser power and a strategy, in the L1 layer in addition to or in place of the L0 layer are obtained in the memory or the like of the information recording apparatus. Incidentally, it is herein assumed that the optical disc in the example of the present invention is already inserted or loaded.

Then, the optical pickup of the information recording apparatus is displaced to a target recording layer (step S102).

Then, it is judged whether or not the target recording layer is the L0 layer (step S103). If the target recording layer is the L0 layer (the step S103: Yes), the recordable maximum speed (e.g., recording speed "A") and the optimum recording condition, such as an optimum laser power and a strategy, in the L0 layer are selected (step S104).

On the other hand, as a result of the judgment in the step S103, if the target recording layer is the L1 layer (the step S103: No), the recordable maximum speed (e.g., recording speed "B") and the optimum recording condition, such as an optimum laser power and a strategy, in the L1 layer are selected (step S105).

Then, the target recording layer is irradiated with the laser for recording, under the selected optimum recording condition, to thereby perform actual recording (step S106).

Incidentally, in the above-mentioned examples, both the parallel method and the opposite method are explained; however, the present invention can be also applied to another method in which layer jump is performed frequently, for example.

The present invention is not limited to the above-described examples, and various changes may be made, if desired, without departing from the essence or spirit of the invention which can be read from the claims and the entire specification. An information recording medium, an information recording apparatus and an information recording method, all of which involve such changes, are also intended to be within the technical scope of the present invention.

### Industrial Applicability

The information recording medium, the information recording apparatus and the information recording method according to the present invention can be applied to an information recording medium, such as a DVD, and can be applied to an information recording apparatus and an information recording method, such as a DVD recorder.

## Claims

1. An information recording medium comprising a plurality of recording layers to record therein information, wherein
at least one of the plurality of recording layers has a management information area to record therein recording speed management information for defining a recordable maximum speed when the information is recorded.

2. The information recording medium according to claim 1, wherein the recording speed management information includes recording speed information which indicates the recordable maximum speed for each of the plurality of recording layers.

3. The information recording medium according to claim 2, wherein the recording speed management information further includes recording condition information which indicates an optimum recording condition for each of the plurality of recording layers, in a form corresponding to the recording speed information.

4. The information recording medium according to claim 3, wherein the recording speed management information has a table on which the recording speed information and the recording condition information are registered for each of the plurality of recording layers, and which has an index.

5. The information recording medium according to claim 1, wherein
recording is performed on said information recording medium by an information recording apparatus in which recording condition information which indicates an optimum recording condition for each of a plurality of recordable maximum speeds is registered, and
the recording speed management information includes recording speed information which indicates the recordable maximum speed for each of the plurality of recording layers.

6. The information recording medium according to claim 1, wherein
recording is performed on said information recording medium by an information recording apparatus in which (i) recording speed information which indicates the maximum speed and (ii) recording condition information which indicates an optimum recording condition for each of a plurality of recordable maximum speeds are registered, for each identification information for identifying respective one of a plurality of information recording media, and
the recording speed management information includes the identification information for identifying said information recording medium.

7. The information recording medium according to claim 1, wherein the recording speed management information is at least partially recorded from the beginning of production of said information recording medium, as pre-information of said information recording medium.

8. The information recording medium according to claim 1, wherein the recording speed management information is at least partially recorded or updated, as written-once or rewritable information.

9. The information recording medium according to claim 1, wherein the management information area is disposed nearer an inner circumference in a top layer out of the plurality of recording layers, and includes a portion in which the recording speed management information with respect to the plurality of recording layers is collectively recorded.

10. The information recording medium according to claim 1, wherein the management information area is disposed in each of the plurality of recording layers.

11. The information recording medium according to claim 1, wherein the plurality of recordable maximum speeds are defined to be higher speeds on an upper layer side out of the plurality of recording layers.

12. An information recording apparatus for recording information onto an information recording medium comprising a plurality of recording layers to record therein the information, wherein at least one of the plurality of recording layers has a management information area to record therein recording speed management information for defining a recordable maximum speed when the information is recorded,
said information recording apparatus comprising:
a reading device for reading the recording speed management information from the management information area;
a recording speed setting device for setting a recording speed corresponding to a recording target layer, in a range of a recordable maximum speed corresponding to the recording target layer in which the information is to be recorded, out of the recordable maximum speed for each of the plurality of recording layers which is defined by the read recording speed management information; and
a recording deice for recording the information into the recording target layer at the set recording speed.

13. The information recording apparatus according to claim 12, wherein
the recording speed management information includes recording speed information which indicates the recordable maximum speed for each of the plurality of recording layers and further includes recording condition information which indicates an optimum recording condition for each of the plurality of recording layers, in a form corresponding to the recording speed information, and
said recording speed setting device sets the recording speed and the recording condition corresponding to the recording target layer, on the basis of the recording speed information and the recording condition information which is read as at least one portion of the recording speed management information.

14. The information recording apparatus according to claim 12, wherein
the recording speed management information includes recording speed information which indicates the recordable maximum speed for each of the plurality of recording layers,
said information recording apparatus is further provided with a storing device in which recording condition information which indicates an optimum recording condition for each of a plurality of recordable maximum speeds is registered,
said reading device reads the recording speed information, as at least one portion of the recording speed management information, and
said recording speed setting device sets the recording speed and the recording condition, on the basis of (i) the read recording speed information and (ii) a recording condition information which corresponds to the read recording speed information, out of the recording condition information which is registered in said storing device.

15. The information recording apparatus according to claim 12, wherein
the recording speed management information includes identification information for identifying said information recording medium,
said information recording apparatus is further provided with a storing device in which (i) recording speed information which indicates the maximum speed and (ii) recording condition information which indicates an optimum recording condition for each of a plurality of recordable maximum speeds are registered, for each identification information for identifying respective one of a plurality of information recording media,
said reading device reads the identification information, as at least one portion of the recording speed management information, and
said recording speed setting device sets the recording speed and the recording condition, on the basis of a recording speed and a recording condition which correspond to the read identification information, out of the recording speed information and the recording condition information which are registered in said storing device.

16. An information recording method of recording information onto an information recording medium comprising a plurality of recording layers to record therein the information, wherein at least one of the plurality of recording layers has a management information area to record therein recording speed management information for defining a recordable maximum speed when the information is recorded,
said information recording method comprising:
a reading process of reading the recording speed management information from the management information area;
a recording speed setting process of setting a recording speed corresponding to a recording target layer, in a range of a recordable maximum speed corresponding to the recording target layer in which the information is to be recorded, out of the recordable maximum speed for each of the plurality of recording layers which is defined by the read recording speed management information; and
a recording process of recording the information into the recording target layer at the set recording speed.
